Europäisches Patentamt

European Patent Office

Office européen des brevets

(11) Publication number: **0 203 371**
A1

# EUROPEAN PATENT APPLICATION

(21) Application number: **86105602.6**

(51) Int. Cl.⁴: **C 03 B 40/02,** C 03 B 9/19

(22) Date of filing: **23.04.86**

(30) Priority: **31.05.85 IT 8412285**

(43) Date of publication of application: **03.12.86**
**Bulletin 86/49**

(84) Designated Contracting States: **AT BE CH DE FR GB IT LI LU NL SE**

(71) Applicant: **VETRO PIAVE S.p.A., Via Ormelle, 8, I-31020 San Polo di Piave Treviso (IT)**

(72) Inventor: **Martire, Walter, Via Gorgazzo, 84, I-31046 Oderzo Treviso (IT)**

(74) Representative: **Piovesana, Paolo, Corso del Popolo, 70, I-30172 Venezia-Mestre (IT)**

(54) Lubricating apparatus for the parison moulds in rotary machines for the production of blow-moulded glass bottles.

(57) The lubricating apparatus for the parison moulds in rotary machines for the production of blow-moulded glass bottles comprises:
– a structure (4) which is mobile synchronously with and concentrically to the rotary machine (2) along that portion in which the parison half-moulds (33) to be lubricated are open,
– at least one lubricating member (27) which can be brought into contact with the cavity of each open half-mould (33),
– means for causing said lubricating member (27) to move vertically while keeping it adhering to the cavity of said open half-mould (32), and
– a plurality of automatic controls which ensure the lubrication of each pair of half-moulds (33) in accordance with a predetermined working cycle.

ACTORUM AG

This invention relates to a lubricating apparatus for the parison moulds in rotary machines for the production of blow-moulded glass bottles.

Machines for the production of blow-moulded glass bottles are known. They generally comprise a circular frame provided with a plurality of parison moulds which are made to pass cyclically below a feeder device which feeds into them the predetermined quantity of glass in the pasty state, which is then fed to the subsequent bottle moulding operations at a frequency determined by the machine operating rate. In particular, each parison mould is formed from two openable half-moulds defining a cavity which corresponds to the bottle parison and is kept lubricated over its inner surface to enable the glass to be easily introduced. This lubrication operation is currently carried out manually by an operator, who dips a brush into a graphite-based emulsion and when the two half-moulds have discharged their parison and are still in the open state passes the brush over the surface of the adjacent half-impressions.

Known rotary machines generally comprise seven moulds, each mould being normally lubricated approximately every 400 bottles. From the machine operating rate (approximately 2700 bottles per hour), it follows that each mould is lubricated approximately every 7-10 minutes.

These known rotary machines have certain drawbacks, and in particular:

- poor reliability of the lubrication operation, as it depends upon the operator's own evaluation,

- the need for the continuous presence of this operator in contact with the machine,

- high environmental pollution in terms both of noise because of the presence of several simultaneously working machines, and of chemical emission because of the graphite fumes from the emulsion given off when this comes into contact with the hot surface (approximately 350°C) of the half-moulds,

- considerable discomfort for the operator, who is compelled to work in a high-temperature environment (45-50°C) with peaks which are even higher during the hot season,

- a negative psychological component due to the continuous uninterrupted operating cycle (nights and weekends included).

According to the invention, all these drawbacks are obviated by a lubricating apparatus for the parison moulds

- 2 -

in rotary machines for the production of blow-moulded. glass bottles, characterised by comprising:

- a structure wich is mobile synchronously with and concentrically to the rotary machine along that portion in which the parison half-moulds to be lubricated are open,

- at least one lubricating member which can be brought into contact with the cavity of each open half-mould,

- means for causing said lubricating member to move vertically while keeping it adhering to the cavity of said open half-mould, and

- a plurality of automatic controls which ensure the lubrication of each pair of half-moulds in accordance with a predetermined working cycle.

A preferred embodiment of the present invention is described in detail hereinafter with reference to the accompanying drawings, in which:

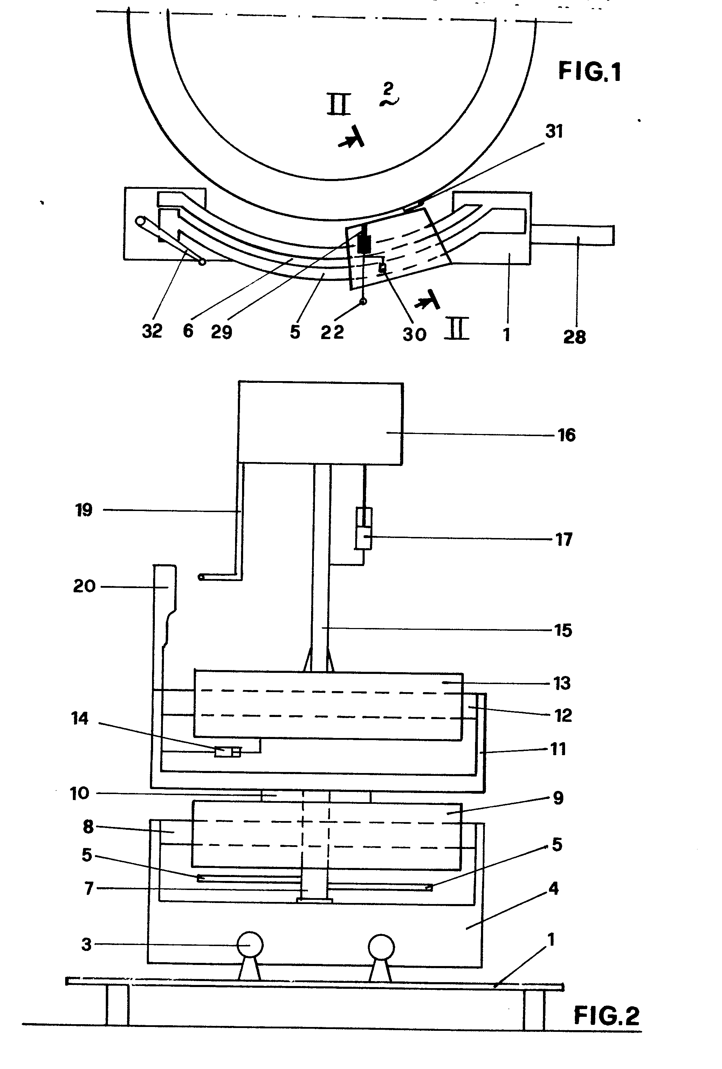

Figure 1 is a diagrammatic plan view of an apparatus according to the invention applied to a rotary machine for the production of blow-moulded glass bottles;

Figure 2 is an enlarged vertical section therethrough on the line II-II of Figure 1;

- 3 -

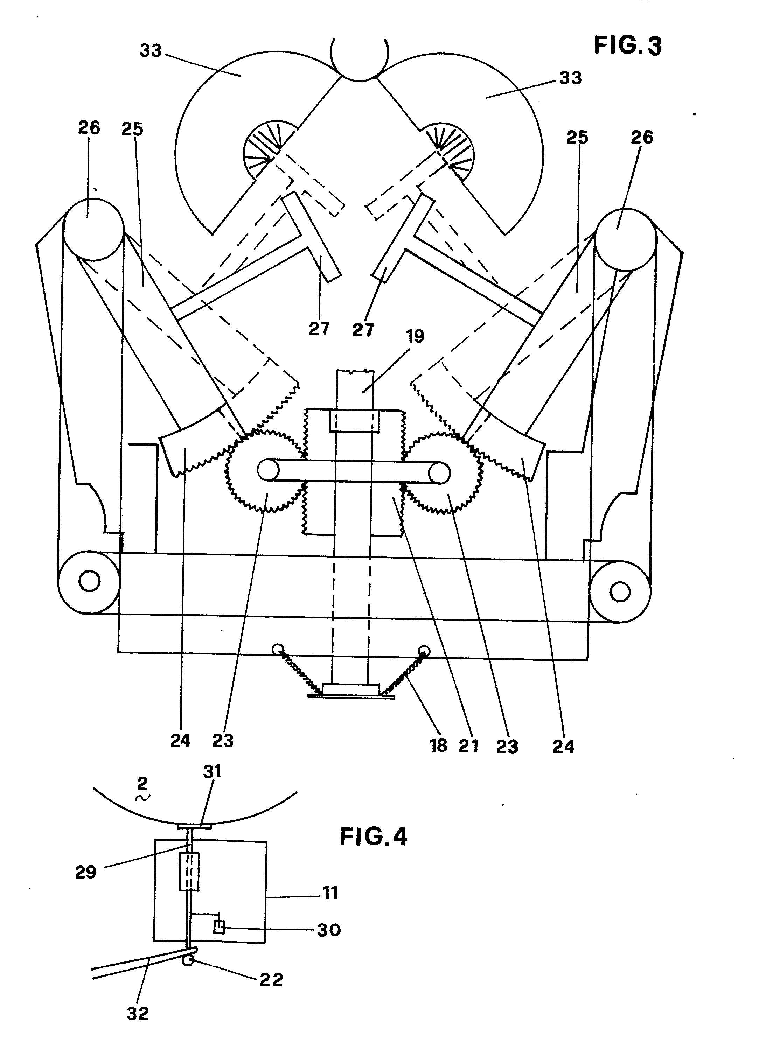

Figure 3 is a detailed plan view of the brush carrier assembly; and

Figure 4 is an enlarged detailed plan view of the unit for mutually engaging the rotary machine and mobile structure of the apparatus according to the invention, and of the automatic safety disengagement system.

As can be seen from the figures, the lubricating apparatus according to the invention comprises substantially a fixed base 1 disposed in correspondence with a determined arc in proximity to a rotary moulding indicated overall by 2. In particular, the base 1 is disposed along that machine portion through which the parisons are withdrawn and the half-moulds remain open.

The base 1 is provided with two parallel straight rails 3, on which a mobile structure 4 slides. On the base 1 there are also provided two parallel guides 5 concentric to the machine 2 and spaced apart to form a guide channel 6, along which two pedestals 7, described more fully hereinafter, can slide.

On the mobile structure 4 there are also provided bars 8 disposed orthogonal to the rails 3 to support and guide a carriage 9, which for descriptive clarity is known hereinafter as the lower carriage.

On the lower carriage 9 there is mounted a thrust bearing 10 rigid with an upper carriage 11. To this latter are fixed the two pedestals 7, which pass through the lower carriage 9 and engage in the channel 6 defined by the two guides 5.

On the upper carriage 11 there are provided two bars 12 for supporting and guiding a slide 13, which as described hereinafter can move in such a direction as to approach and to withdraw from the machine 2. This radial movement of the slide 13 is controlled by a pneumatic cylinder-piston unit, indicated schematically by 14.

There is mounted on the slide 13 a vertical frame 15 for supporting and guiding a brush carrier assembly 16 which is mobile vertically along said frame 15 under the control of a pneumatic cylinder-piston unit indicated schematically by 17.

The brush carrier assembly 16 is mobile radially to the machine 2 and has fitted to it a rod 19 which extends towards a cam 20, which is mounted on the upper carriage 11 and has its contour conforming to the vertical profile of the impressions of the half-moulds 33 to be lubricated.

The rod 19 is provided with a rack portion 21 which

- 5 -

is mobile axially to the brush carrier assembly 16 and radially to the machine 2.

The brush carrier assembly 16 also comprises two gear wheels 23 of vertical axis which are situated on opposite sides of the rack 21 and engage with it. The gear wheels 23 also engage with two toothed sectors 24 provided at one end of horizontal arms 25, which have their other end rigid with vertical shafts 26.

On each horizontal arm 25 there is mounted a continuously rotating brush 27 driven by a motor (not shown in the drawings).

The vertical support frame 15 for the brush carrier assembly 16 also comprises a feeder provided with spray nozzles facing the rotary brushes 27 when these are in their non-operating position, ie when raised out of contact with the half-moulds 33 to be lubricated.

The invention also comprises a pneumatic cylinder-piston unit 28 mounted on the base 1 parallel to the rails 3 and acting in such a manner as to cause the mobile structure 4 to move along them.

There is also mounted on the upper carriage 11 a shaft 29 disposed radially to the machine 2 and mobile axially, under the control of a further pneumatic cylinder-piston unit 30, between two end positions. When in that end position closer to the machine 2, the shaft 29 has its front end interfering with one of a series of fork-shaped engagement blocks 31 provided on the machine 2 in a number equal to the number of parison moulds of this latter. When in its other end position, the shaft 29 is completely released from said fork 31.

The fork-shaped block 31 has a shape suitable to enable the engagement of the shaft 29, but at the same time to prevent the inopportune disengagement thereof. For example such a shape can comprise a pawl (not shown in the drawings) which enables the end of the shaft 29 to be engaged within the prongs of the fork-shaped block 31, but prevents its disengagement except for rearward axial displacement of said shaft 29.

In addition, the rear end of the shaft 29 comprises a projection 22 which when said shaft is in its advanced position interferes with a safety release member 32 positioned on the base 1 in correspondence with the front end-of-travel position of the mobile structure 4 along the rails 3, and acts in the sense of disengaging the shaft 29 from the fork 31 with which at that moment it is engaged.

The apparatus according to the invention also comprises a plurality of sensors, limit microswitches and monitoring and control members which implement the operating cycle and which, not forming part of the subject of the invention, will merely be referred to during the course of the description of operation of the apparatus, as they arise.

The operation of the apparatus according to the invention is described hereinafter starting, for reasons of clarity, from the stage in which a pair of half-moulds 33 has already been lubricated and the various members have returned to their initial position for carrying out a new operating cycle.

Thus, under these conditions the mobile structure 4 is at the commencement of the rails 3 (cylinder-piston unit 28 in its minimun elongation state), the shaft 29 is in its rear end-of-travel position (cylinder-piston unit 30 in its minimum elongation state), the carriage 11 is at its maximum distance from the machine 2 (cylinder-piston unit 14 in its maximum elongation state), the rod 19 is withdrawn from the cam 20, the rotary brushes have approached the lubricant emulsion spray nozzles, and the brush carrier assembly 16 is in its upper end-of-travel position (cylinder-piston unit 17 in its maximum elongation state).

After a predetermined number of moulds have passed in front of the apparatus according to the invention following the termination of the preceding lubrication operation, this number obviously being neither a multiple or a sub-multiple of the number of moulds in the machine 2 in order to ensure that all the moulds become lubricated, a command is fed in order to operate the cylinder-piston units 28 and 30.

On operation, the cylinder-piston unit 28 causes the mobile structure 4 to move with increasing speed along the rails 3 of the base 1 until said structure 4 reaches a speed which is close to but slightly less than the peripheral speed of the machine 2.

The cylinder-piston unit 30 urges the shaft 29 axially forwards so that it interferes with the path of the engagement members 31 and becomes engaged by that member corresponding to the pair of half-moulds 33 to be lubricated.

At this stage, said half-moulds 33 have just discharged their parison, and are in the open state facing the brush carrier assembly 16.

When, by virtue of its shape, the engagement member 31 has securely engaged the shaft 29, from here onwards the machine 2 and mobile structure 4 move with precisely equal speed, and thus the position of the brush carrier assembly 16 remains fixed relative to the facing pair of open half-moulds 33.

As the mobile structure 4 advances along the rails 3, the pedestals 7, which are rigid with the upper carriage 11, are guided within the channel 6 and therefore compel the carriage to undergo a combined rotary and translational movement with its trajectory concentric to the machine 2.

Simultaneously, again because of the engagement between the pedestals 7 and guides 5, the lower carriage 9 moves along the bars 8 of the mobile structure 4, so as to describe during the elongation of the cylinder-piston unit 28 a circumferential arc concentric to the machine 2.

During this movement, the cylinder-piston unit 14 is made to retract, with the result that the slide 13 moves (radial to the machine 2) along the bars 12 of the upper carriage 11, to approach the machine 2. After the front end of the rod 19 has touched the cam 20, further advancement of the slide 13 causes the rack 21 to move axially in the opposite direction and, by way of the gear wheels 23, rotate the toothed sectors 24 and bring the rotary brushes 27, mounted on the horizontal arms 25 of these latter, into contact with the impressions of the two open half-moulds 33.

When the brushes 27 have made contact with said half-impressions, an automatic command is fed to the cylinder-piston unit 17 to cause the brush carrier assembly 16 to descend along the vertical frame 15. During this descent, the rod 19 remains continuously in contact with the cam 20 by virtue of the action of the cylinder-piston unit 14 and damping springs 18, and consequently the rod 19, and with it the rack 21, undergo axial movements conforming to the contour of the cam, and thus to the profile of the half-mould impressions. These movements are transmitted to the rotary brushes 27, which consequently faithfully follow the pattern of the two half-mould impressions during the descent of the brush carrier assembly 16.

When the brush carrier assembly 16 reaches its lower end-of-travel, an opposite command is fed to the cylinder-piston unit 14 to withdraw the slide 13 from the machine 2, to the cylinder-piston unit 17 to again raise the brush carrier assembly 16, to the cylinder-piston unit 30 to disengage the shaft 29 from the engagement fork 31, and to the cylinder-piston unit 28 to return the mobile structure 4 to its waiting position for repeat of the lubricating cycle after the predetermined number of moulds have passed.

If for any reason, and in particular because of accidental malfunction of the apparatus, the shaft 29 is not released from the engagement fork 31 at the predetermined moment, the projection 22 provided at the rear end of said shaft 29 becomes engaged by the safety release member 32, which therefore releases the mobile structure 4 from the machine 2, to prevent any damage to the overall assembly.

From the aforegoing it is apparent that the apparatus according to the invention completely and satisfactorily resolves all the problems which have previously arisen in lubricating the parison moulds in rotary machines for the production of blow-moulded glass bottles. In particular, it makes the lubrication operations extremely reliable as they are no longer dependent on any subjective evaluation by the operator, and at the same time makes his presence superfluous, thus obviating all the aforesaid physical and psychological drawbacks.

0203371

C L A I M S

1.      A lubricating apparatus for  the parison moulds  in rotary machines  for the  production of  blow-moulded  glass bottles characterized by comprising:

- a structure (4)  which is mobile  synchronously with  and concentrically to  the  rotary  machine  (2)  along  that portion in  which  the parison  half-moulds  (33)  to  be lubricated are open,

- at least one lubricating member (27) which can be brought into contact  with the  cavity  of each  open  half-mould (33),

- means for causing  said lubricating member  (27) to  move vertically while  keeping it  adhering to  the cavity  of said open half-mould (32), and

- a  plurality  of  automatic  controls  which  ensure  the lubrication of each pair of half-moulds (33) in ccordance with a predetermined working cycle.

2.      An apparatus as claimed  in claim 1,  characterised by comprising a base (1) provided with rails (3) along which said structure (4) is urged to slide in both directions by a drive member (28).

3.      An apparatus as claimed  in claim 2,  characterised in that with the base (1) there are associated two  straight

- 1 -

parallel rails (3) and two guides (5) which are curved to the shape of the rotary machine (2) and define between them a channel (6) for guiding a support structure (16) for said lubricating member (27), said structure being mobile concentric to said machine (2).

4.      An apparatus as claimed in claim 3, characterised in that bars (8) orthogonal to the rails (3) are applied to the structure (4) in order to guide a carriage (9) to which an overlying carriage (11) for supporting the structure (16) is rotatably coupled, said carriage (11) being provided with means (7) which are guided within the channel (6) defined by the guides (5).

5.      An apparatus as claimed in claims 1 and 4, characterised in that to the carriage (11) there is applied a shaft (29) extending radially to the rotary machine (2) and mobile between two end positions, namely a rear position in which it is disengaged from said machine (2) and a front position in which it is engaged in engagement members (31) provided in said machine (2) in a number corresponding to the number of pairs of parison half-moulds (33), the position of said engagement members (31) on said machine (2) being such as to ensure correct positioning of the support structure (16) with the lubricating member (27) facing the

0203371

confronting cavity of the open half-moulds (33) to .be lubricated.

6. An apparatus as claimed in claim 5, characterised in that the engagement member (31) is fork-shaped with a profile such as to enable the end of the shaft (29) to be engaged on approaching the rotary machine (2) but to prevent it becoming disengaged should it withdraw therefrom.

7. An apparatus as claimed in claims 2 and 5, characterised in that the shaft (29) is provided at its rear end with a projecting portion engageable by a safety release member (32) provided in the base (1) in correspondence with the front end-of-travel position of the mobile structure (4) along the rails (3).

8. An apparatus as claimed in claim 5, characterised by comprising a cylinder-piston unit (30) for axially moving the shaft (29).

9. An apparatus as claimed in claims 1 and 4, characterised in that a vertical frame (15) for supporting and guiding the structure (16) is applied to the carriage (11).

10. An apparatus as claimed in claim 9, characterised in that bars (12) are applied to the carriage (11) to guide a slide (13) which is mobile radially to the rotary machine

- 3 -

(2) and supports the vertical frame (15).

11.    An apparatus as claimed in claim 10, characterised in that a vertically operating cylinder-piston unit (17) is interposed between the frame (15) and the support structure (16) for the lubricating member (27).

12.    An apparatus as claimed in claim 1, characterised in that the lubricating member consists of a rotary brush (27).

13.    An apparatus as claimed in claims 10 and 12, characterised by comprising at least one pair of rotary brushes (27) mounted on arms (25) which are mobile horizontally to ensure adherence of said brushes (27) to the inner surface of the impressions of the open half-moulds (33) to be lubricated.

14.    An apparatus as claimed in claims 1 and 12, characterised in that gear wheels (23) are fixed on to the arms (25) of the rotary brushes (27) and engage a rack (21) which is mobile radially to the rotary machine (2) and has one of its ends kept elastically in contact with a cam (20) reproducing the vertical profile of the impressions of the half-moulds (33).

0203371

FIG.1

FIG.2

FIG. 3

FIG. 4

European Patent Office

**EUROPEAN SEARCH REPORT**

0203371
Application number

EP 86 10 5602

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 523 016 (MATTOS)<br>* Whole document *<br><br>--- | 1 | C 03 B 40/02<br>C 03 B 9/19 |
| A | W. GIEGERICH et al.:<br>"Glasmaschinen. Aufbau und Betrieb der Maschinen zur Formgebung des heissen Glases",<br>1964, pages 285-294,<br>Springer-Verlag, Berlin, DE; W. GIEGERICH: "Roirant-R7-Maschine"<br><br>----- | 1 | |

**TECHNICAL FIELDS SEARCHED (Int. Cl.4)**

C 03 B 40/00
C 03 B 9/00

The present search report has been drawn up for all claims

| Place of search | Date of completion of the search | Examiner |
|---|---|---|
| THE HAGUE | 13-06-1986 | VAN DEN BOSSCHE W.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82